# EUROPEAN PATENT SPECIFICATION

(11) **EP 4 165 314 B1**
(45) Date of publication and mention of the grant of the patent: **24.09.2025**
(21) Application number: 21770114.3
(22) Date of filing: 20.01.2021
(51) Int. Cl.: F16B 12/20

(54) **A MINIFIX ECCENTRIC FURNITURE FASTENER CAM FORMED BY BEING FORGED FROM A STEEL SHEET AND A METHOD OF PRODUCING SAID CAM**
AUS EINEM STAHLBLECH GESCHMIEDETER EXZENTRISCHER MINIFIX-BEFESTIGUNGSNOCKEN EINES MÖBELSTÜCKS UND VERFAHREN ZU DESSEN HERSTELLUNG
CAME DE FIXATION DE MEUBLE EXCENTRIQUE MINIFIX FORMÉE PAR FORGEAGE À PARTIR D'UNE TÔLE D'ACIER ET PROCÉDÉ DE PRODUCTION DE LADITE CAME

(30) Priority: 10.06.2020 TR 202008952
(43) Date of publication of application: 19.04.2023
(73) Proprietor: Metalkam Baglanti Elemanlari Sanayi Ticaret Anonim Sirketi, Kocasinan/Kayseri (TR)
(72) Inventor: MORI, Menahem, Besiktas/Istanbul (TR)
(74) Representative: Sagdiç, Turgay
(86) International application number: PCT/TR2021/050045
(87) International publication number: WO 2021/251921

(56) References cited:
- WO-A1-2008/053176
- WO-A1-2012/089028
- CN-A- 104 819 188
- CN-A- 109 973 477
- CN-U- 201 963 665

## Description

### Technical Field

The invention is related to a steel eccentric furniture fastener cam formed by being forged from a steel sheet and a method of producing said cam.

### Prior Art

Fasteners are elements or mechanisms that are capable of binding at least two furniture units or furniture parts or other items, by pulling them together as a result of a mechanical operation.

Fastening materials used in furniture production are made of metal or plastic. The properties of these materials vary according to their place of usage.

Generally, fasteners used in the furniture sector are classified as follows:
- Steel (Rastex) eccentric fasteners
- Shelf holder (VB) eccentric fastener
- Body(Trapeze) fastener
- Corner fasteners
- Pullers
- Bedstead fittings (Bedstead hinge)
- Thumb nuts
- Moon connection
- Module fasteners
- Fastening angles

Steel Eccentric Fasteners are fasteners made of metal, metal alloy and plastic material that function on the basis of a cylindrical element consisting of a curved line formed by off-center points, with one end screwed and the other end tightening another element with a special form and shape.

A strong pulling action is provided with a connection method that operates on the principle of central pulling. Thus, tight and high security connections are achieved.

The advantages of a steel eccentric furniture fastener cam can be listed as follows.
- By means of the spherical form of the head, the cam (puller shaft) placed in the steel eccentric furniture fastener cam body provides contact from every point in the body and maximum stability is obtained. Thus, no problems such as loosening and breaking of the assembly are encountered.
- Pulling distance of more than 5 mm, which is obtained with only half a turn, can tolerate the hole distance error margins from +1 mm to approximately -0.5 mm without pulling loss.
- It provides the desired pulling value without reaching the upper limit of the rotation angle of 195°.

Eccentric connection is tightened with a flat or cross head screwdriver. There is no need for a plug, as the shouldered fastener covers the appearance of defective holes. By means of the inner and outer tabs of this fastener, its strength was increased. The furniture corners are not likely to slip, as the connection anchor is firmly placed in the hole.

The tab on the cam body ensures that the anchor fits into the slot and ensures a strong clamping. The installation of the anchor is performed manually without tools.

Some steel eccentric furniture fastener cam types are equipped with additional pulling features. For this reason, the furniture side panels can be pulled up to 4 mm from the shelf table bay.

These fasteners are used between the glazing bar and the table, in shelf connections, table corner joints and similar places. Cylindrical and eccentric fasteners can join rotationally or non-rotationally and are also used as reinforcement in glued joining.

This eccentric fastener is double safe with internal and external threads. The threads on the outer surface of the tensioning part prevent the eccentric from coming back during tensioning. The return resistance is much higher than other eccentric parts. Since the connection anchor is firmly placed in the hole, there is no sliding of the tables.

A steel eccentric furniture fastener cam is a strong mechanical fastener. Even in furniture transportation, there is absolutely no loosening due to shaking impacts. The intermediate screw always pulls the anchor centrally. In the present art, steel eccentric furniture fasteners are melted from zamac material, which is an aluminum zinc alloy, and injected with pressure in the mold in a hot chamber metal injection machine and shaped. Since the alloy is melted during this process, high energy costs may occur during production.

However, the strength of the material produced from Al and Zn alloy, in other words, from zamac, remains low. In this case, the long-term use of the fastener, during the disassembly and assembly, an important problem is created in situations, such as the transportation of the furniture, etc.

Since the tightening torque of the cam, which is a product of zamac, is around 8 N/mm, crushings, spillage and peeling can occur during furniture assembly.

Another technical problem that arises for steel eccentric fasteners produced from zamac is that the zamac material is expensive and the production method used for its production is a difficult and expensive production method.

As a result, this situation causes the cost of produced steel eccentric furniture fastener to increase.

Patent application numbered WO03027510 can be given as an example for steel eccentric furniture cam fasteners used in the present art.

Patent application numbered WO03027510 discloses a steel eccentric furniture cam fastener used to detachably connect two adjacent structural parts. It is described that the shaft and cam that forms the aforementioned apparatus can be produced with zinc or aluminum based die-casting alloy (zamac) .

Patent application numbered WO0235102 describes an integrated steel eccentric furniture fastener cam connection assembly that can be used to removably fix two adjacent parts along their flat joint surfaces.

According to the description of the related application, all parts of the fixing device are made of zinc cast metal parts.

Also, patent applications numbered GB227793 and US5567081 disclose that parts for steel eccentric furniture cam fasteners can be produced using zinc-based die-casting alloys.

It is understood that with the structuring of the patent application numbered WO2008053176, it is aimed to eliminate the technical problems experienced in the steel eccentric furniture cam connection fasteners made of zamac described above.

For this purpose, it is understood that the cam of the eccentric furniture fastener described in the scope of the application numbered WO2008053176 is produced from steel.

According to the application numbered WO2008053176, the cam can be produced from metal by cold deformation method from sheet or wire. In order to form the cam drum according to the production method described in the application, the metal plate is rolled to the cylinder and the final structure is formed by bending the upper part. In order to form other details of the cam body, previously formed windows on metal plate are used.

The formation of the steel eccentric furniture fastener cam steel plate of the application numbered WO2008053176 by bending can cause some technical problems. The high strength of the steel sheet does not allow the use of thick sheets during the rolling and bending process. In the case of using thick sheet metal, the rolling and bending processes become difficult, and the strength decreases in the case of thin sheets.

Another problem is that the applied production method has difficulty in adapting to large volume continuous production systems. In order to produce each cam, the rolling and bending requirement of pre-prepared steel plates can make the mass production possibilities difficult.

Another handicap is the necessity of joining some parts by welding and similar connection methods while the metal plate is rolling and bending as described in the description part of the application numbered WO2008053176.

This situation both increases the ability of the application to be compatible with mass production and causes an increase in production costs. On the other hand, plate parts joined by welding and similar means can create a significant disadvantage for strength.

The patent application CN 104 819 188 A discloses a steel eccentric furniture fastener cam formed from cold-rolled steel and is produced on a precision punching machine.

### The Problems to be Solved by the Invention

The aim of the invention is to provide the formation of a steel eccentric furniture fastener cam formed by being forged from a steel sheet according to claim 1.

Since the metal melting operation is not required during the use of the production method of the invention, energy savings can be achieved.

The product strength has reached 60 - 65 N/mm2 as cam formation is achieved by cold forging process by using steel sheet. A significant strength advantage has been provided compared to conventional cams made of special zamac.

With the 8-fold increase in strength compared to zamac products, the effects of breakage, stripping, loosening, abrasion, disassembly, etc. are avoided.

Again, due to its strength, it is possible to create a cam structure that can be disassembled and assembled for many times without loosening.

Since the steel material is cheaper than zamac ant this creates a significant cost advantage and the production costs are reduced, the final product cost has been reduced.

Production is possible without the need for coating by using galvanized sheet.

Since the production method of the invention provides ease of production, it is possible to operate with one machine, one mold.

It has been possible to create high strength products without rolling, window forming, bending and welding processes. Again, the ability to produce without these processes has facilitated the production process, both increased the production cost and also increased the applicability of the process.

### Description of Figures

Figure 1. The view of the steel eccentric furniture fastener cam formed by being forged from a steel sheet before the sheet printing is folded
Figure 2. The side view of the steel eccentric furniture fastener cam formed by being forged from a steel sheet after production

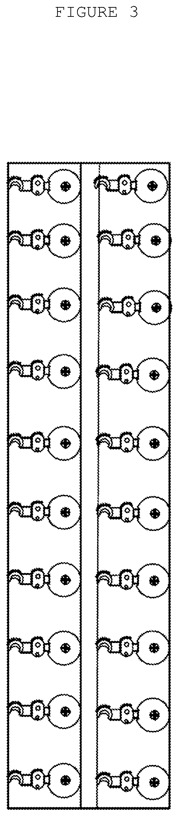

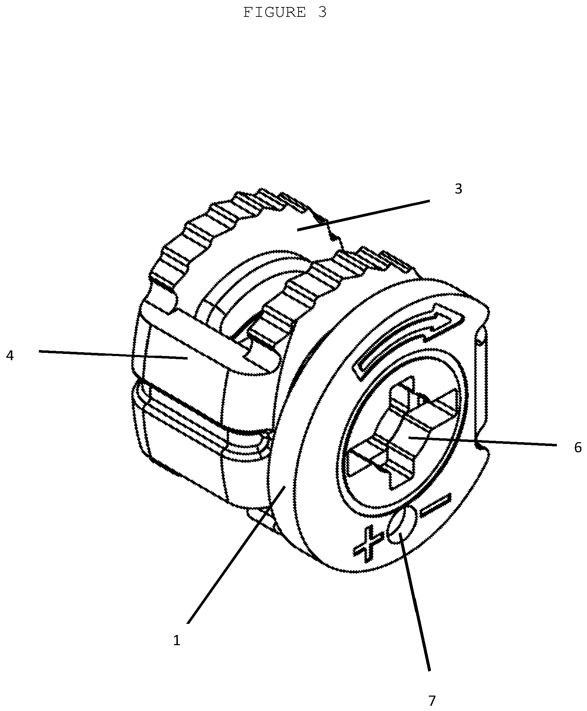

Figure 3. The top view of the steel eccentric furniture fastener cams formed by being forged from a steel sheet while they are forged and shaped in the mold.
Figure 4. The front perspective view of the steel eccentric furniture fastener cam formed by being forged from a steel sheet after production

### Description of References in the Figures

**1.** Upper body
**2.** Middle body
**3.** Lower body
**4.** Interconnection part
**5.** Thread
**6.** Screwdriver end
**7.** key wrench
**8.** Fixing hole

### Description of the Invention

The invention is a method of producing steel eccentric furniture fastener cam formed by being forged from a steel sheet, comprising the process steps according to claim 1.

According to the production method according to claim 1, the length of the interconnection part (4) between the upper body (1) and the middle body (2) is relatively shorter than the length of the other interconnection part (4). Thus, the aperture formed between the upper body (1) and the middle body (2) after the bending and folding can be formed much smaller than the aperture formed between the middle body (2) and the lower body (3).

After forging and crushing processes, the upper body (1) and the middle body (2) get closer to each other and at least one section of the upper body (1) and the middle body (2) are brought into contact with each other.

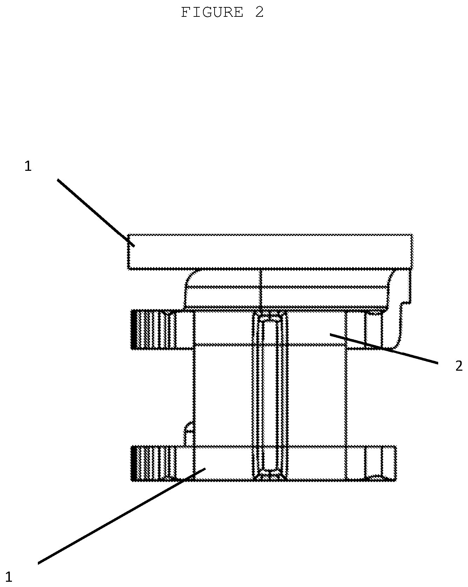

According to Figure 2, after production, the upper body (1) and the middle body (2) are fully in contact.

After the crushing and folding processes, the screwdriver end (6)that belongs to the upper body (1) and the key wrench (7) that belongs to the middle body (2) are overlapped. When the user wants to use a screwdriver or different wrenches, the hole formed by the overlapping of the screwdriver end (6) and the key wrench (7) can be used.

By bringing closer, the upper body (1) and the middle body (2) and overlapping the screwdriver end (6) and the key wrench (7) can allow double-layered strength in case of using screwdriver or different wrenches.

During the use of a screwdriver or wrench, the screwdriver end (6) and the key wrench (7) will be double layered to prevent stripping.

According to the invention, the upper body (1) and the middle body (2) are connected to each other via at least one fixing hole (8) during or after the bending, folding and crushing processes.

According to the invention, the fixing hole (8) enables the upper body (1) to be connected to the middle body (2) by means of a pin.

The pin can be formed during molding in the section where the upper body (1) connects to the middle body (2). According to another embodiment, the pin can also be added as an externally mounted part.

Within the different embodiments of the invention, the pin can be made more resistant by welding and similar fixing processes.

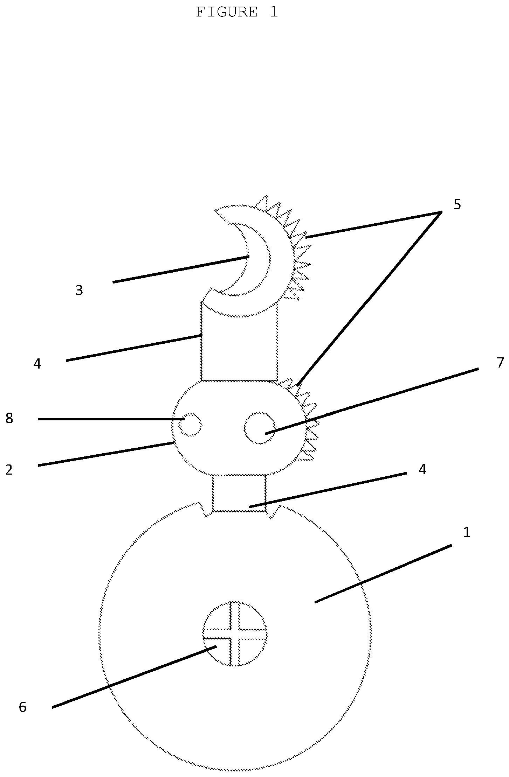

During the molding according to Figure 1, threads (5) were formed on the edges of the middle body (2) and lower body (3). It is aimed to overlap the threads (5) of the middle body (2) and the threads (5) of the lower body (3) after bending, folding and crushing processes.

The overlapped 2 thread groups aim to increase the holding ability of the aperture formed between the middle body (2) and the lower body (3).

According to the preferred embodiment of the invention, it may be possible to apply the said production method with a single machine. In this case, the production method can be achieved by forging, crushing, cutting and bending the steel sheet with the desired intricate shape with the H press machine and progressive mold.

During this process, the structure is crushed while being folded and the upper body (1) and the middle body (2) are glued to each other.

Thus, a single machine and production using a single machine can be achieved. With this application, product strength increases and production / product cost can be reduced.

With the production method of steel eccentric furniture fastener cam formed by being forged from a steel sheet, it will be possible to produce cam made entirely of steel.

The steel eccentric furniture fastener cam according to the invention is formed with the method according to claim 1.

As shown in Figure 2, according to the preferred embodiment of the invention, the upper body (1) and the middle body (2) are fully in contact.

The upper body (1) and the middle body (2) are also fixed to each other by connecting with a connection element (4). According to the invention, the connection element is in the form of a pin and aims to be connected to the fixing hole (8) formed on the middle body (2).

According to Figure 2, after production, the upper body (1) and the middle body (2) are fully in contact. There is a screwdriver end (6) on the upper body (1) and a key wrench (7) on the middle body (2). Screwdriver end (6) and key wrench (7) are overlapped.

According to Figure 1, there are threads (5) on the edges of the middle body (2) and the lower body (3). The threads (5) of the middle body (2) and the threads (5) of the lower body (3) are overlapped.

## Claims

1. A method of producing a steel eccentric furniture fastener cam formed by being forged from a steel sheet; **characterized in that** the method comprises the process steps of;
• Forming an upper body (1) having a screwdriver end (6)and a middle body (2) and a lower body (3) having a key wrench (7) and fixing hole (8)as a block in one piece by being forged from a steel sheet, through crushing and cutting such that an interconnection part (4) is formed there-between,
• Bending and folding of the part that has been formed as a block in one piece, so that the upper body (1), middle body (2) and lower body (3) overlap each other,
• after the process of folding over each other, forming the part by crushing again,
• connecting the upper body (1) and the middle body (2) to each other via at least one fixing hole (8) during or after the bending, folding and crushing processes,
• connecting the upper body (1) and the middle body (2) to each other by a pin through at least one fixing hole (8) during or after the bending, folding and crushing processes.

2. A method of producing a steel eccentric furniture fastener cam according to claim 1; **characterized in that**
• the length of the interconnection part (4) between the upper body (1) and the middle body (2) is relatively shorter than the length of the other interconnection part (4)and
• the aperture formed between the upper body (1) and the middle body (2) after the bending and folding process can be formed to be much smaller than the aperture formed between the middle body (2) and the lower body (3).

3. A method of producing a steel eccentric furniture fastener cam according to claim 1; **characterized by** the process step of bringing at least one section of the upper body (1) and the middle body (2) closer to each other during the forging and crushing processes in such a way that they contact each other.

4. A method of producing a steel eccentric furniture fastener cam according to claim 3; **characterized by** the process step of bringing the upper body (1) and the middle body (2) closer to each other during the forging and crushing processes in such a way that they are fully in contact with each other.

5. A method of producing a steel eccentric furniture fastener cam according to any of the preceding claims; **characterized by** the process step of overlapping the screwdriver end(6) that belongs to the upper body (1) and the key wrench (7)that belongs to the middle body (2) during the crushing and folding processes.

6. A method of producing a steel eccentric furniture fastener cam according to any of the preceding claims; **characterized by** the process step of forming threads (5) on the edges of the middle body (2) and lower body (3) so that the threads (5) of the middle body (2) and the threads (5) of the lower body (3) are overlapped after the bending, folding and crushing processes.

7. A method of producing a steel eccentric furniture fastener cam according to any of the preceding claims; **characterized by** the process step of forging, crushing, cutting and bending the steel sheet with the desired intricate shape with the H press machine and progressive mold.

8. A steel eccentric furniture fastener cam formed by being forged from a steel sheet with the method of producing according to claim 1.

## Patentansprüche

1. Verfahren zur Herstellung eines exzentrischen Möbelverschlusses aus Stahl, die durch Schmieden aus einem Stahlblech geformt wird; **dadurch gekennzeichnet, dass** das Verfahren die folgenden Prozessschritte umfasst:
• Bilden eines Oberkörpers (1) mit einem Schraubendreherdende (6) und einen Mittelkörper (2) und einen Unterkörper (3) mit einem Schlüsselschlüssel (7) und einem Befestigungsloch (8) als Block in einem Stück durch Schmieden aus einem Stahlblech durch Zerkleinern und Schneiden, so dass dazwischen ein Verbindungsteil (4) geformt wird,
• Biegen und Falten des als Block einstückig geformten Teils, sodass sich Oberkörper (1), Mittelkörper (2) und Unterkörper (3) überlappen,
• nach dem Prozess des Zusammenfaltens durch erneutes Zerkleinern das Teil zu formen,
• Verbinden des Oberkörpers (1) und des Mittelkörpers (2) über mindestens ein Befestigungsloch (8) während oder nach den Biege-, Falt- und Zerkleinerung Vorgängen,
• Verbinden des Oberkörpers (1) und des Mittelkörpers (2) durch einen Stift durch mindestens ein Befestigungsloch (8) während oder nach den Biege-, Falt- und Zerkleinerung Vorgängen miteinander.

2. Verfahren zur Herstellung eines exzentrischen Möbelverschlusses aus Stahl nach Anspruch 1, **dadurch gekennzeichnet, dass**
• die Länge des Verbindungsteils (4) zwischen dem Oberkörper (1) und dem Mittelkörper (2) relativ kürzer ist als die Länge des anderen Verbindungsteils (4) und
• die Öffnung, die nach dem Biege- und Faltvorgang zwischen dem Oberkörper (1) und dem Mittelkörper (2) geformt wird, kann so geformt werden, dass sie viel kleiner ist als die Öffnung, die zwischen dem Mittelkörper (2) und dem Unterkörper (3) geformt wird.

3. Verfahren zur Herstellung eines exzentrischen Möbelverschlusses aus Stahl nach Anspruch 1, **gekennzeichnet durch** den Prozessschritt des Annäherns wenigstens eines Abschnitts des Oberkörpers (1) und des Mittelkörpers (2) während des Schmiedens und Zerkleinerung Vorgängen derart, dass sie einander berühren.

4. Verfahren zur Herstellung eines exzentrischen Möbelverschlusses aus Stahl nach Anspruch 3, **gekennzeichnet durch** den Prozessschritt des Annäherns des Oberkörpers (1) und des Mittelkörpers (2) aneinander während des Schmiedens und Zerkleinerung Vorgängen derart, dass sie vollständig miteinander in Kontakt stehen.

5. Verfahren zur Herstellung eines exzentrischen Möbelverschlusses aus Stahl nach einem der vorhergehenden Ansprüche, **gekennzeichnet durch** den Prozessschritt des Überlappens des zum Oberkörper (1) gehörenden Schraubendreherdendes (6) und des zum Mittelkörper (2) gehörenden Schlüsselschlüssels (7) während der Zerkleinerung und Faltvorgängen.

6. Verfahren zur Herstellung eines exzentrischen Möbelverschlusses aus Stahl nach einem der vorhergehenden Ansprüche; **gekennzeichnet durch** den Prozessschritt des Ausbildens von Gewinden (5) an den Kanten des mittleren Körpers (2) und des unteren Körpers (3), so dass die Gewinde (5) des mittleren Körpers (2) und die Gewinde (5) des unteren Körpers (3) nach dem Biege-, Falt- und Zerkleinerung Vorgängen überlappt werden.

7. Verfahren zur Herstellung eines exzentrischen Möbelverschlusses aus Stahl nach einem der vorhergehenden Ansprüche; **gekennzeichnet durch** den Prozessschritt des Schmiedens, Zerkleinerns, Schneidens und Biegens des Stahlblechs mit der gewünschten komplizierten Form mit der H-Pressmaschine und der Folgeform.

8. Ein exzentrischer Möbelverschluss aus Stahl, der durch Schmieden aus einem Stahlblech nach dem Herstellungsverfahren nach Anspruch 1 geformt wird.

## Revendications

1. Procédé de fabrication d'une came excentrique en acier de fixation de meubles, formée en étant forgée à partir d'une tôle d'acier, **caractérisé en ce que** le procédé comprend les étapes du processus suivantes :
· former un corps supérieur (1) ayant une extrémité du tournevis (6), un corps intermédiaire (2) et un corps inférieur (3) ayant une clé allen (7) et un trou de fixation (8) en tant que bloc d'une seule pièce en étant forgé à partir d'une tôle d'acier, par écrasement et découpe de telle sorte qu'une partie d'interconnexion (4) soit formée entre ceux-ci,
· cintrer et plier la partie qui a été formée en tant que bloc d'une seule pièce, de manière que le corps supérieur (1), le corps intermédiaire (2) et le corps inférieur (3) se chevauchent mutuellement,
· après le processus de pliage les uns sur les autres, former la pièce en écrasant à nouveau,
· relier le corps supérieur (1) et le corps intermédiaire (2) l'un à l'autre via au moins un trou de fixation (8) pendant ou après les processus de cintrage, de pliage et d'écrasement,
· relier le corps supérieur (1) et le corps intermédiaire (2) l'un à l'autre par une broche passant à travers au moins un trou de fixation (8) pendant ou après les processus de cintrage, de pliage et d'écrasement.

2. Procédé de fabrication d'une came excentrique en acier de fixation de meubles selon la revendication 1, **caractérisé en ce que:**
· la longueur de la partie d'interconnexion (4) entre le corps supérieur (1) et le corps intermédiaire (2) est relativement plus courte que la longueur de l'autre partie d'interconnexion (4), et
· l'ouverture formée entre le corps supérieur (1) et le corps intermédiaire (2) après le processus de cintrage et de pliage peut être formée pour être beaucoup plus petite que l'ouverture formée entre le corps intermédiaire (2) et le corps inférieur (3).

3. Procédé de fabrication d'une came excentrique en acier de fixation de meubles selon la revendication 1, **caractérisé en ce que** l'étape du processus consistant à rapprocher au moins une section du corps supérieur (1) et du corps intermédiaire (2) l'une de l'autre pendant les processus de forgeage et d'écrasement de telle sorte qu'ils soient en contact l'une avec l'autre.

4. Procédé de fabrication d'une came excentrique en acier de fixation de meubles selon la revendication 3, **caractérisé en ce que** l'étape du processus consistant à rapprocher le corps supérieur (1) et le corps intermédiaire (2) l'un de l'autre pendant les processus de forgeage et d'écrasement de telle sorte qu'ils soient entièrement en contact l'un avec l'autre.

5. Procédé de fabrication d'une came excentrique en acier de fixation de selon l'une quelconque des revendications précédentes, **caractérisé en ce que** l'étape du processus consistant à chevaucher l'extrémité du tournevis (6) qui appartient au corps supérieur (1) et la clé allen (7) qui appartient au corps intermédiaire (2) pendant les processus d'écrasement et de pliage.

6. Procédé de fabrication d'une came excentrique en acier de fixation de selon l'une quelconque des revendications précédentes, **caractérisé en ce que** l'étape du processus consistant à former des filets (5) sur les bords du corps intermédiaire (2) et du corps inférieur (3) de manière à ce que les filets (5) du corps intermédiaire (2) et les filets (5) du corps inférieur (3) se chevauchent après les processus de cintrage, de pliage et d'écrasement.

7. Procédé de fabrication d'une came excentrique en acier de fixation de selon l'une quelconque des revendications précédentes, **caractérisé en ce que** l'étape du processus consistant à forger, écraser, couper et cintrer la tôle d'acier à la forme complexe souhaitée à l'aide d'une presse H et d'un moule progressif.

8. Came excentrique en acier de la fixation de meubles, formée en étant forgée à partir d'une tôle d'acier selon le procédé de fabrication selon la revendication 1.
